# EUROPEAN PATENT SPECIFICATION

(11) **EP 0 664 679 B1**
(45) Date of publication and mention of the grant of the patent: **22.04.1998**
(21) Application number: 93919354.6
(22) Date of filing: 02.09.1993
(51) Int. Cl.: A23N 7/02

(54) **A ROLLER AND A MACHINE FOR PEELING OR SHAPING POTATOES AND THE LIKE PRODUCTS**
WALZE UND MASCHINE ZUM SCHÄLEN UND AUSFORMEN VON KARTOFFELN UND ÄHNLICHEN PRODUKTEN
CYLINDRE ET MACHINE SERVANT A EPLUCHER OU FA ONNER DES POMMES DE TERRE ET D'AUTRES PRODUITS SIMILAIRES

(30) Priority: 16.09.1992 FI 924148
(43) Date of publication of application: 02.08.1995
(73) Proprietor: OY T & S ENGELHOLM AB, 64230 Närpes (FI)
(72) Inventor: ENGELHOLM, Torbjörn, FIN-64230 Närpes (FI)
(74) Representative: Tomlinson, Kerry John
(86) International application number: FI9300351
(87) International publication number: WO9406311

(56) References cited:
- EP-A- 0 014 598
- FI-B- 67 657
- SE-B- 447 330
- US-A- 3 946 658

## Description

The present invention relates to a roller for a machine for peeling or shaping potatoes and similar products, the roller comprising a substantially cylindrical body having a grinding surface for contacting with the product to be treated during the peeling or shaping.

Even though the invention will be described in the following mainly in connection with the peeling of potatoes, the invention is likewise applicable to the peeling of other root crops, such as carrots, and fruits, such as apples. The invention is also applicable to shaping e.g. Paris potato balls and other products that can be shaped.

It is previously known to peel potatoes mechanically by bringing them into contact with rotating grinding rollers which gradually grind off the peel.

For example, EP-A-0322252 discloses a peeling machine comprising cylindrical grinding rollers arranged in the form of a drum. Not only the grinding rollers but also the drum rotates during the peeling, so that the potatoes roll on effectively and all peel-covered surfaces will make contact with the grinding rollers sooner or later.

Applicant's Finnish Patent 67 657 (NL patent Application 8 402 277) discloses a peeling/shaping machine comprising two parallel, cooperating profiled grinding rollers each provided with peripheral grooves, the groove pairs forming outlet openings for the ground potato balls. Both grinding rollers rotate in the same direction but at different speeds, so that the potato is caused to bounce repeatedly up into the air, thus turning a new peel-covered surface into contact with the rollers.

In the prior art peeling machines, the grinding surface of the grinding rollers is formed by a layer of carborundum applied to a smooth cylindrical body possibly provided with peripheral grooves, so that the grinding surface is coarse and knobby. The layer of carborundum is usually glued on to a metal body.

Such a grinding roller arrangement, however, has certain disadvantages. This is because the fixing of the carborundum layer is rather an extensive work stage and the glue joint is liable to break sooner or later, so that portions of the carborundum layer are detached from the roller body and may get among the treated products, especially when the peeling takes place at a relatively high speed, as suggested in the above-mentioned Finnish Patent 67 657. Another disadvantage is that a grinding layer made of carborundum grinds the peel off the potato by a tearing effect, which makes this way of peeling less suitable for peeling and shaping softer fruits, such as apples, cucumbers, etc.

The object of the present invention is to provide a grinding roller which avoids the above-mentioned disadvantages and enables not only a simpler production but also peeling of soft fruits. This is achieved by means of a grinding roller according to the invention, which is characterized in that the grinding surface of the body has axially extending grooves which form several peeling or shaping teeth mutually spaced in the peripheral direction of the grinding surface.

The invention is based on the idea that the "knobby" grinding surface of the grinding roller is formed by parallel grooves made in the grinding surface, so that the grinding surface performs the peeling of the product as a cutting operation in place of a tearing operation. The grinding surface of the grinding roller can thus be made integral with the roller body, and so there is no risk of the surface coming off, not even at high rotation rates. The roller material may thus be plastic, light metal, or the like. In addition, this arrangement enables the products to be peeled more gently, and so even relatively soft products can be peeled. A further advantage is that the surface of the treated products will be considerably smoother than a torn surface. The arrangement according to the invention also makes it possible to produce round balls by shaping cubic pieces of cucumber, melon, frozen vegetables, ice, etc. This has not been possible previously.

The present invention also relates to a peeling machine for peeling or shaping potatoes or the like products, comprising
- a frame,
- at least two grinding rollers supported rotatably by the frame and positioned essentially in parallel with and adjacent to each other for peeling or shaping the products, and
- a driving device for rotating the grinding rollers,
- the grinding rollers having a substantially cylindrical grinding surface.

The peeling machine is characterized in that the grinding surface of at least one grinding roller has axially extending grooves which form several peeling or shaping teeth mutually spaced in the peripheral direction of the grinding surface. A peeling machine of this kind provides the advantages mentioned above in connection with the grinding roller.

In the following the invention will be described in more detail with reference to the attached drawing, wherein
Figures 1 and 2 are vertical views of a peeling machine provided with grinding rollers according to the invention as seen from two different directions;

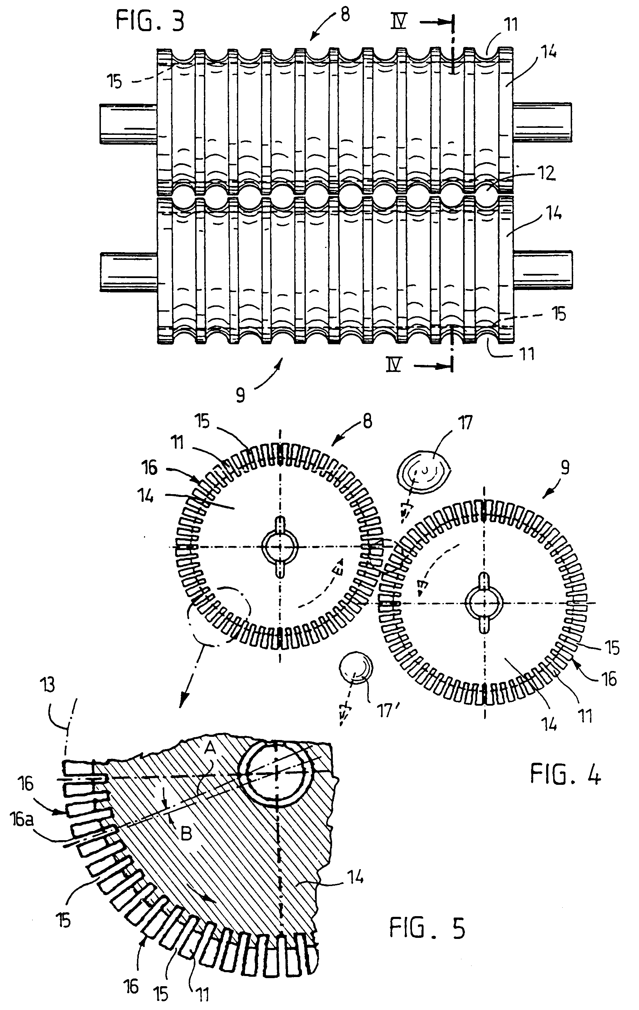

Figures 3 and 4 are a top view and a sectional view along the line IV-IV in Figure 3, respectively, of a roller pair according to the invention; and
Figure 5 is an enlarged view of a portion of the grinding surface of the roller shown in Figure 4.

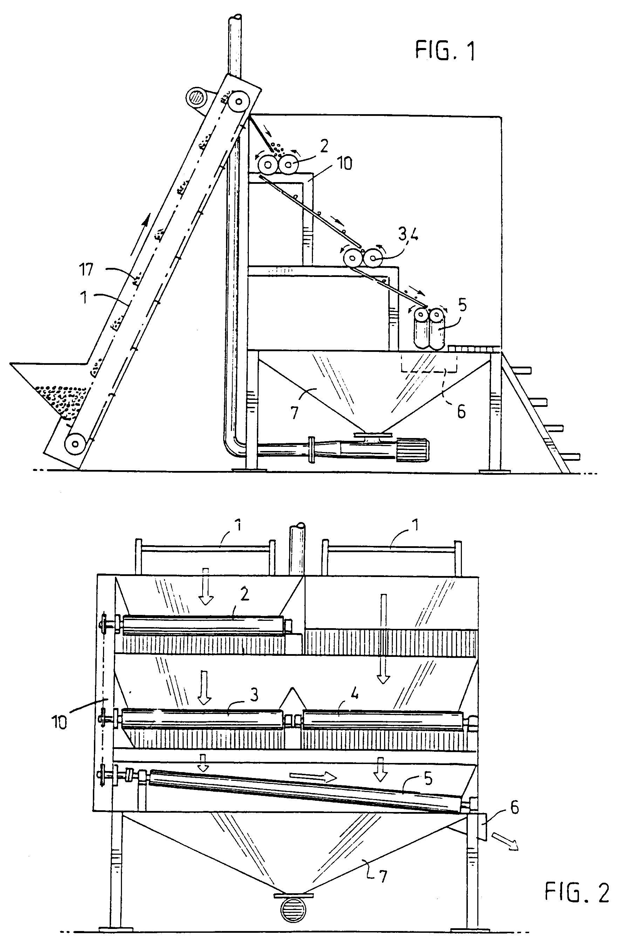

The peeling machine shown in Figures 1 and 2 is of a construction described in Finnish Patent 67 657, and therefore its construction and operation will be described only in short in the following.

The peeling machine comprises a vertical conveyor 1, an upper pair 2 of pre-grinding rollers, two lower pairs 3, 4 of grinding rollers, and a longitudinal conveyor 5.

The upper pair 3 of rollers is intended for preliminary grinding of large potatoes which are first ground sufficiently and then slide down to the lower pair 4 of rollers, which grinds the potatoes into final potato balls, which slide down to the conveyor 5 and further to an outlet 6. Smaller potatoes slide directly down to the second lower pair of rollers. Potatoes smaller than the desired size of the balls as well as insufficiently ground potatoes and cleft potatoes fall down into a waste trough 7.

Each pair 3, 4 of grinding rollers comprises two grinding rollers 8 and 9 which are mounted rotatably in a machine frame so that the shafts of the rollers are parallel with each other and so spaced from each other that only a small gap remains between the rollers. The rollers are coupled through suitable transmissions to motors not shown for rotating the rollers in the same direction but at different rotation speeds.

The rollers are provided with peripheral grooves 11 semi-circular in cross-section and positioned axially adjacent to each other. The roller grooves are arranged in pairs in line with each other so that several circular passages 12 of the same size as the potato balls to be produced are formed between the rollers.

According to the invention, mutually spaced axial grooves 15 are cut in a grinding surface 13 of a body 14 of the grinding roller, so that a rim of peeling teeth 16 is formed in the grinding surface. The grooves are radially deeper than the peripheral grooves 11, so that the peripheral grooves form sharp semi-circular grinding edges 16a extending in the longitudinal direction of the roller.

According to a preferred embodiment, the grooves 15 are cut in a plane A which forms an angle B, e.g. 6°, with respect to an axial plane. The slanting angle is selected so that the forward longitudinal grinding edge 16a of the tooth in the direction of rotation forms a cutting edge.

The pair of rollers operates in the following way:

When an unpeeled potato 17 falls down between the rollers, the roller 8 subjects the potato to a first grinding effect tending to lift it, and the roller 9 subjects the potato to a second grinding effect tending to push it downward. So the potato is caused to rotate about its centre of gravity, so that the roller 9, having a higher rotation speed, grinds the rotating potato on all sides. After the potato has been ground into a round potato ball 17' of a desired size, the ball falls down through the passage 12.

The drawings and the description related thereto are only intended to illustrate the idea of the invention. In their details, the grinding roller and the peeling machine may vary within the scope of the claims. Accordingly, if required, cut grooves of some other type may be used, and the slanting angle of the grooves may be greater or smaller or possibly even zero. In certain cases, it may be appropriate that only one of the grinding rollers in a pair of rollers is constructed in accordance with the invention, whereas the other grinding roller, which rotates more slowly, may be provided with a conventional grinding surface. The grinding rollers according to the invention can be used advantageously even in a drum peeling machine. In a specific machine, one roller has been rotated at 2,800 rpm and the other roller at 230 rpm. The rotation speeds may vary according to the kind of the products to be peeled and/or shaped. The expression "axially extending" is also intended to include e.g. spiral grooves cut in the grinding surface of the roller, which may give an advantageous result in certain cases.

## Claims

1. A roller for a machine for peeling or shaping potatoes and similar products, the roller (8) comprising a substantially cylindrical body (14) having a grinding surface (13) for contacting with the product (17) to be treated during the peeling or shaping, whereby the body (14) of the roller (8) has peripheral grooves (11) positioned axially adjacent to each other, **characterized** in that the grinding surface (13) of the body (14) has radially inwardly extending, open axial grooves (15) which form several peeling or shaping teeth (16) mutually spaced in the peripheral direction of the grinding surface, said teeth forming sharp longitudinal edges (16a) with the grinding surface (13), and that the axially extending grooves (15) are deeper than the peripheral grooves (11) in the radial direction of the roller.

2. A roller according to claim 1, **characterized** in that the axially extending grooves (15) are cut in the body (14).

3. A roller according to any of the preceding claims, **characterized** in that each one of the axially extending grooves (15) is positioned in a plane (A) deviating from the central line of the body (14) so that a forward edge (16a) of the teeth (16) in the direction of rotation of the roller (8) forms a cutting edge.

4. A machine for peeling or shaping potatoes and the like products, comprising
- a frame (10)
- at least two grinding rollers (8, 9) supported rotatably by the frame and positioned essentially in parallel with and adjacent to each other for peeling or shaping the products (17), and
- a driving device for rotating the grinding rollers,
- whereby the grinding rollers having a substantially cylindrical grinding surface (13) and the cylindrical body (14) of the roller (8) has peripheral grooves (11) positioned axially adjacent to each other,
**characterized** in that the grinding surface (13) of at least one grinding roller (8) has radially inwardly extending, open axial grooves (15) which form several, in the peripheral direction of the grinding surface mutually spaced peeling or shaping teeth (16) forming sharp longitudinal edges (16a) with the grinding surface (13) and that the axially extending grooves (15) of the grinding roller (8) are deeper than the peripheral grooves (11) in the radial direction of the roller.

5. A machine according to claim 4, **characterized** in that the axially extending grooves (15) are cut in a body (14).

## Patentansprüche

1. Walze für eine Maschine zum Schälen oder Formen von Kartoffeln und ähnlichen Produkten, wobei die Walze (8) einen im wesentlichen zylindrischen Körper (14) umfaßt, der eine Reiboberfläche (13) zum Berühren des während des Schälens oder Formens zu behandelnden Produkts (17) aufweist, wodurch der Körper (14) der Walze (8) axial zueinander benachbart angeordnete Umfangsnuten (11) aufweist, **dadurch gekennzeichnet, daß** die Reiboberfläche (13) des Körpers (14) sich radial nach innen erstreckende, offene Axialnuten (15) aufweist, die mehrere Schäl- oder Formzähne (16) bilden, die in der Umfangsrichtung der Reiboberfläche gleichmäßig beabstandet sind, wobei die Zähne scharfe Längskanten (16a) mit der Reiboberfläche (13) bilden, und dadurch, daß die sich axial erstreckende Nuten (15) tiefer sind, als die Umfangsnuten (11) in der Radialrichtung der Walze.

2. Walze nach Anspruch 1, **dadurch gekennzeichnet, daß** die sich axial erstreckenden Nuten (15) in den Körper (14) geschnitten sind.

3. Walze nach mindestens einem der vorhergehenden Ansprüche, **dadurch gekennzeichnet, daß** jede der sich axial erstreckenden Nuten (15) in einer Ebene (A) angeordnet ist, die von der Mittellinie des Körpers (14) derart abweicht, daß eine in der Drehrichtung der Walze (8) vordere Kante (16a) des Zahns (16) eine Schneidkante bildet.

4. Maschine zum Schälen oder Formen von Kartoffeln und ähnlichen Produkten, umfassend:
- einen Rahmen (10),
- zumindest zwei drehbeweglich durch den Rahmen getragene und im wesentlichen parallel und benachbart zueinander zum Schälen oder Formen der Produkte (17) angeordnete Reibwalzen (8, 9), und
- eine Antriebseinrichtung zum Drehen der Reibwalzen,
- wobei die Reibwalzen eine im wesentlichen zylindrische Reiboberfläche (13) aufweisen und der zylindrische Körper (14) der Walze (8) axial benachbart zueinander angeordnete Umfangsnuten (11) aufweist,
**dadurch gekennzeichnet, daß** die Reiboberfläche (13) von zumindest einer Reibwalze (8) sich radial nach innen erstreckende, offene Axialnuten (15) aufweist, die mehrere, in der Umfangsrichtung der Reiboberfläche gleichmäßig beabstandete Schäl- oder Formzähne (16) bilden, die scharfe längsgerichtete Kanten (16a) mit der Reiboberfläche (13) bilden, und daß die sich axial erstreckenden Nuten (15) der Reibwalze (8) tiefer sind, als die Umfangsnuten (11) in der Radialrichtung der Walze.

5. Maschine nach Anspruch 4, **dadurch gekennzeichnet, daß** die sich axial erstreckenden Nuten (15) in einen Körper (14) geschnitten sind.

## Revendications

1. Cylindre pour une machine destinée à éplucher ou façonner des pommes de terre et des produits semblables, le cylindre (8) comprenant un corps sensiblement cylindrique (14) ayant une surface de râpage (13) pour venir en contact avec le produit (17) à traiter pendant l'épluchage ou le façonnage, dans lequel le corps (14) du cylindre (8) comporte des gorges périphériques (11) positionnées axialement et adjacentes les unes aux autres, caractérisé en ce que la surface de râpage (13) du corps (14) comporte des gorges axiales ouvertes (15), qui s'étendent radialement vers l'intérieur, et qui forment plusieurs dents d'épluchage ou de façonnage (16) mutuellement espacées dans la direction périphérique de la surface de râpage, lesdites dents formant des arêtes vives longitudinales (16a) avec la surface de râpage (13), et en ce que les gorges qui s'étendent axialement (15) sont plus profondes que les gorges périphériques (11) dans la direction radiale du cylindre.

2. Cylindre selon la revendication 1, caractérisé en ce que les gorges qui s'étendent axialement (15) sont taillées dans le corps (14).

3. Cylindre selon l'une quelconque des revendications précédentes, caractérisé en ce que chacune des gorges qui s'étendent axialement (15) est positionnée dans un plan (A) qui dévie de la ligne centrale du corps (14), de sorte qu'une arête antérieure (16a) des dents (16) dans la direction de rotation du cylindre (8) forme une arête de coupe.

4. Machine pour éplucher ou façonner des pommes de terre ou des produits similaires, comprenant :
- un châssis (10),
- au moins deux cylindres de râpage (8, 9) supportés en rotation par le châssis et positionnés essentiellement parallèles et adjacents l'un à l'autre pour éplucher ou façonner les produits (17), et
- un dispositif d'entraînement pour faire tourner les cylindres de râpage,
- dans laquelle les cylindres de râpage possèdent une surface de râpage sensiblement cylindrique (13) et le corps cylindrique (14) du cylindre (8) comporte des gorges périphériques (11) positionnées axialement de façon adjacente les unes aux autres,
caractérisée en ce que la surface de râpage (13) de l'un au moins des cylindres de râpage (8) comporte des gorges axialement ouvertes (15), qui s'étendent radialement vers l'intérieur et qui forment plusieurs dents d'épluchage ou de façonnage (16) mutuellement espacées dans la direction périphérique de la surface de râpage, formant des arêtes longitudinales vives (16a) avec la surface de râpage (13), et en ce que les gorges qui s'étendent axialement (15) du cylindre de râpage (8) sont plus profondes que les gorges périphériques (11) dans la direction radiale du cylindre.

5. Machine selon la revendication 4, caractérisée en ce que des gorges qui s'étendent axialement (15) sont taillées dans un corps (14).
